# EUROPÄISCHE PATENTSCHRIFT

(11) **EP 2 573 845 B1**
(45) Veröffentlichungstag und Bekanntmachung des Hinweises auf die Patenterteilung: **31.10.2018**
(21) Anmeldenummer: 11182723.4
(22) Anmeldetag: 26.09.2011
(51) Int. Cl.: H01M 4/62, H01M 4/134, H01M 10/0525, H01M 4/1395, H01M 4/133, H01M 4/1393, H01M 4/04, H01M 4/02, H01M 4/36, H01M 4/587

(54) **Strukturstabiles Aktivmaterial für Batterieelektroden**
Structural active material for battery electrodes
Matériau actif à structure stable pour électrodes de batterie

(43) Veröffentlichungstag der Anmeldung: 27.03.2013
(73) Patentinhaber: VARTA Micro Innovation GmbH, 8010 Graz (AT)
(72) Erfinder: Scharfegger, Michaela, 8010 Graz (AT); Kren, Harald, 8047 Graz (AT); Koller, Stefan, 8010 Graz (AT)
(74) Vertreter: Patentanwaltskanzlei Cartagena

(56) Entgegenhaltungen:
- WO-A1-2010/014966
- US-A1- 2005 136 330
- US-A1- 2006 035 149
- US-A1- 2009 252 864
- US-B2- 6 589 696

## Beschreibung

Die vorliegende Erfindung betrifft ein Verfahren zur Herstellung von Aktivmaterial für die Elektrode einer elektrochemischen Zelle. Weiterhin betrifft sie nach dem Verfahren hergestelltes Aktivmaterial sowie Elektroden und elektrochemische Zellen mit einem solchen Aktivmaterial.

Der Begriff "Batterie" meinte ursprünglich mehrere in Serie geschaltete elektrochemische Zellen in einem Gehäuse. Heute werden jedoch auch einzelne elektrochemische Zellen häufig als Batterie bezeichnet. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotenzial stattfindende Teilreaktion läuft an der negativen Elektrode ab, eine bei vergleichsweise höherem Redoxpotenzial an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Unter den sekundären Zellen und Batterien werden vergleichsweise hohe Energiedichten von Zellen und Batterien auf Basis von Lithium-Ionen erreicht. Diese weisen in der Regel sogenannte Kompositelektroden auf, die neben elektrochemisch aktiven Komponenten auch elektrochemisch inaktive Komponenten umfassen. Als elektrochemisch aktive Komponenten (oft auch als Aktivmaterialien bezeichnet) für Zellen und Batterien auf Basis von Lithium-Ionen kommen grundsätzlich sämtliche Materialien in Frage, die Lithiumionen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar sind. So sind beispielsweise die Elemente Zinn, Antimon und Silizium in der Lage, mit Lithium intermetallische Phasen zu bilden. Für die positive Elektrode umfassen die zu diesem Zeitpunkt industriell verwendeten Aktivmaterialien vor allem Lithiumkobaltoxid (LiCoO₂), LiMn₂O₄-Spinell, Lithiumeisenphosphat (LiFePO₄) und Derivate wie beispielsweise LiNi_{1/3}Mn_{1/3}Co_{1/3}O₂ oder LiMnPO₄. Sämtliche elektrochemisch aktiven Materialien sind in der Regel in Partikelform in den Elektroden enthalten.

Als elektrochemisch inaktive Komponenten sind an erster Stelle Elektrodenbinder und Stromableiter zu nennen. Über Stromableiter werden Elektronen den Elektroden zu- oder abgeführt. Elektrodenbinder sorgen für die mechanische Stabilität der Elektroden sowie für die Kontaktierung der Partikel aus elektrochemisch aktivem Material untereinander und zum Stromableiter. Zu einer verbesserten elektrischen Anbindung der elektrochemisch aktiven Partikel an den Stromableiter können leitfähigkeitsverbessernde Additive beitragen, die ebenfalls unter den Sammelbegriff "elektrochemisch inaktive Komponenten" zu subsumieren sind. Sämtliche elektrochemisch inaktive Komponenten sollten zumindest im Potenzialbereich der jeweiligen Elektrode elektrochemisch stabil sein und einen chemisch inerten Charakter gegenüber gängigen Elektrolytlösungen aufweisen. Gängige Elektrolytlösungen sind z.B. Lösungen von Lithiumsalzen wie Lithiumhexafluorophosphat in organischen Lösungsmitteln wie Ether und Ester der Kohlensäure.

Aus der WO 2010/014966 A1 ist ein Elektrodenaktivmaterial bekannt, das nanoskalige Siliziumpartikel enthält. Diese sind in einen Polymerelektrolyten eingebettet, gegebenenfalls zusammen mit Kohlenstoffpartikeln. Der Polymerelektrolyt ist in der Lage, Volumenschwankungen der Silizium- und gegebenenfalls der Kohlenstoffpartikel bei Lade- und Entladevorgängen auszugleichen.

Aus der US 2006/0035149 A1 ist ein Elektrodenaktivmaterial bekannt, das neben Silizium-Kohlenstoff-Kompositpartikeln auch Kohlenstofffasern aufweisen kann.

Aus der US 2005/0136330 A1 und der US 2009/0252864 A1 sind Elektrodenaktivmaterialien für Lithium-Ionen-Batterien bekannt, die Silizium-Kohlenstoff-Kompositpartikel aufweisen. Letztere werden hergestellt, indem Siliziumpartikel mit einem Beschichtungsmaterial aus der Gruppe mit Petroleum, Teer, Phenolharzen, Zuckern, Polyacrylonitril und Lignin beschichtet werden, gefolgt von einer Pyrolyse des Zersetzungsmaterials.

Von Bedeutung für die Performance von sekundären Lithium-Ionen-Zellen ist die Tatsache, dass sich bereits beim ersten Lade-/ Entladezyklus solcher Zellen (der sogenannten Formierung) auf der Oberfläche der elektrochemisch aktiven Materialien in der Anode eine Deckschicht ausbildet, die in der Regel aus Elektrolytzersetzungsprodukten und oxidiertem Lithium besteht. Bezeichnet wird diese Deckschicht als "solid electrolyte interface" (SEI). Die SEI ist im Idealfall nur noch für die extrem kleinen Lithiumionen permeabel und unterbindet einen weiteren direkten Kontakt der Elektrolytlösung mit dem elektrochemisch aktiven Material in der Anode. Insofern hat die Bildung der SEI durchaus positive Effekte. Nachteilig ist allerdings, dass bei der Bildung der SEI mobiles Lithium verloren geht und gleichzeitig auch der Innenwiderstand der Zelle ansteigt.

Der vorliegenden Erfindung lag die Aufgabe zugrunde, ein neues, alternatives Elektrodenaktivmaterial bereitzustellen, das den Bau von Batterien mit relativ hoher Energiedichte ermöglicht, das zugleich jedoch weniger Nachteile aufweist als die oben genannten aus dem Stand der Technik bekannten Aktivmaterialien.

Diese Aufgabe wird gelöst durch das Verfahren mit den Merkmalen des Anspruchs 1 und das Aktivmaterial mit den Merkmalen des Anspruchs 11. Bevorzugte Ausführungsformen des erfindungsgemäßen Verfahrens sind in den abhängigen Ansprüchen 2 bis 10 angegeben. Auch die Elektrode mit den Merkmalen des Anspruchs 12 und die elektrochemische Zelle mit den Merkmalen des Anspruchs 13 sind Gegenstand der vorliegenden Erfindung. Der Wortlaut sämtlicher Ansprüche wird hiermit durch Bezugnahme zum Inhalt dieser Beschreibung gemacht.

Das erfindungsgemäße Verfahren dient der Herstellung von Aktivmaterial für Elektroden von elektrochemischen Zellen, insbesondere von Zellen auf Basis von Lithium-Ionen-Technologie, also von Material, das im Rahmen der eingangs beschriebenen Lade- und Entladevorgänge Lithium-Ionen ein- oder auslagert oder mit Lithium legiert. Es umfasst stets die folgenden Schritte:
- In einem Schritt werden Lithium interkalierende Kohlenstoffpartikel, im Folgenden auch als Komponente 1 bezeichnet, bereitgestellt. Diese weisen Größen im microskaligen Bereich auf, ihre mittlere Partikelgröße liegt bevorzugt zwischen 1 µm und 100 µm. Innerhalb dieses Bereiches sind mittlere Partikelgrößen zwischen 5 µm und 50 µm weiter bevorzugt. Zur Interkalation von Lithium befähigte Kohlenstoffmaterialien wurden eingangs erwähnt, besonders bevorzugt handelt es sich bei den erfindungsgemäß verwendeten Kohlenstoffpartikeln um Partikel mit Graphitstruktur.
- In einem weiteren Schritt werden Partikel aus metallischem Silizium bereitgestellt, im Folgenden auch als Komponente 2 bezeichnet. Diese sind nanoskalig, sie weisen bevorzugt eine mittlere Partikelgröße zwischen 10 nm und 500 nm auf. Innerhalb dieses Bereiches sind mittlere Partikelgrößen zwischen 10 nm und 250 nm, insbesondere zwischen 10 nm und 100 nm, weiter bevorzugt.
- Als dritte Komponente wird ein Polymer oder ein Polymervorläufer, aus dem das Polymer gebildet werden kann, bereitgestellt. Das Polymer zeichnet sich dadurch aus, dass es durch Pyrolyse in amorphen Kohlenstoff umgewandelt werden kann.

- In einem weiteren Schritt werden die Komponenten 1 bis 3 zu einer Mischung verarbeitet. Hierbei kann gegebenenfalls auch die Umwandlung des Polymervorläufers in das Polymer erfolgen oder zumindest eingeleitet werden. Details hierzu folgen.
- Anschließend wird die Mischung unter Ausschluss von Luftsauerstoff wärmebehandelt. Die Temperatur bei der Wärmebehandlung wird dabei so eingestellt, dass sich das pyrolisierbare Polymer, gegebenenfalls auch der Polymervorläufer (sofern er nicht vollständig zu dem Polymer umgewandelt wurde) unter Bildung von amorphem Kohlenstoff zersetzt.

Aus diesem Verfahren resultieren Lithium interkalierende Kohlenstoffpartikel, die hüllenartig von einer amorphen Kohlenstoffschicht überzogen sind, in die die Siliziumpartikel eingebettet sind. Diese lassen sich als Aktivmaterial für die Elektroden von elektrochemischen Zellen verwenden und zeichnen sich als solches durch eine sehr hohe Zyklenstabilität aus. Die amorphe Kohlenstoffschicht hemmt den Kontakt der Siliziumpartikel und der Lithium interkalierenden Kohlenstoffpartikel mit dem Elektrolyten der Zellen und verhindert dadurch übergroße Verluste an mobilem Lithium, wie sie bei der eingangs beschriebenen SEI-Bildung auftreten können.

Kompositmaterialien aus Graphit und Silizium sind grundsätzlich bereits bekannt. So ist beispielsweise in der DE 10 2008 063 552 A1 ein Aktivmaterial mit einer Kern-Hülle-Struktur offenbart. Der Kern besteht dabei aus einem Graphitpartikel, die Hülle aus metallischem Silizium, das bevorzugt durch thermische Zersetzung eines Silans gebildet wird.

Aus der US 6,589,696 B2 ist ein Aktivmaterial bekannt, das Graphitpartikel umfasst, auf deren Oberfläche microskalige Siliziumpartikel angeordnet sind, die in einen amorphen Kohlenstofffilm eingebunden sind. Insbesondere dieses weist Ähnlichkeiten zu gemäß obigem Verfahren herstellbarem Aktivmaterial auf, unterscheidet sich aber von diesem in einem wichtigen Punkt, nämlich in der Größe der Siliziumpartikel. Im Gegensatz zu den in der US 6,589,696 B2 beschriebenen Partikeln sind die vorliegend zum Einsatz kommenden nämlich nanoskalig, also sehr viel kleiner.

Dieser Unterschied ist in diverser Hinsicht wichtig. Insbesondere wurde gefunden, dass das Ersetzen der microskaligen Siliziumpartikel durch nanoskalige sehr positive Auswirkungen auf die Zyklenstabilität des Aktivmaterials und damit auch auf die Lebensdauer einer elektrochemischen Zelle oder Batterie mit einem solchen Aktivmaterial hat. Zurückgeführt wird dies darauf, dass nanoskalige Siliziumpartikel bei der Ein- und Auslagerung von Lithiumionen einer aus absoluter Sicht sehr viel geringeren Volumenexpansion unterliegen als microskalige Siliziumpartikel. Entsprechend geringer ist auch die mechanische Belastung der unmittelbaren Umgebung der Siliziumpartikel innerhalb einer Elektrode. Diese Umgebung wird erfindungsgemäß von dem erwähnten amorphen Kohlenstoff gebildet, der aus der Zersetzung des Polymers oder gegebenenfalls des Polymervorläufers resultiert. Dieser bildet eine Art Matrix, in welche die nanoskaligen Siliziumpartikel eingeschlossen sind. Die Matrix gewährleistet eine gute elektrische Kontaktierung, zum einen der Siliziumpartikel untereinander und zum anderen der von der amorphen Kohlenstoffschicht umhüllten Lithium interkalierenden Kohlenstoffpartikel.

Die Verwendung von nanoskaligen Siliziumpartikeln hat zur Folge, dass nicht jedes beliebige Polymer oder jeder beliebige Polymervorläufer einsetzbar ist. Insbesondere die in der US 6,589,696 B2 beschriebenen Polymermaterialien sind teilweise gänzlich ungeeignet zur Verwendung in Kombination mit nanoskaligen Siliziumpartikeln. Weder die Polymermaterialien selbst noch ihre Zersetzungsprodukte dürfen nämlich zu einer oxidativen Passivierung der Siliziumpartikel führen. Verwendet man beispielsweise die in der US 6,589,696 B2 beschriebenen Zelluloseharze in Kombination mit nanoskaligen Partikeln, so resultiert ein Aktivmaterial mit deutlich geringerer spezifischer Kapazität als a priori zu erwarten wäre. Zurückgeführt wird dies darauf, dass ein Zelluloseharz offensichtlich sehr viel aktiven Sauerstoff in Form von freien Hydroxygruppen trägt, der bei einer Wärmebehandlung mit den nanoskaligen Siliziumpartikeln, die aufgrund ihrer geringen Größe eine sehr hohe Reaktivität aufweisen, zu Siliziumdioxid reagiert, also einen Teil des eingesetzten metallischen Siliziums deaktiviert.

Stattdessen kommen vorliegend die Materialien Epoxidharz, Polyurethanharz und Polyesterharz als Komponente 3 in einem erfindungsgemäßen Verfahren zum Einsatz. Alle diese Komponenten weisen zwar ebenfalls Sauerstoffatome als Strukturelement auf molekularer Ebene auf, allerdings nicht in Form von freien Hydroxygruppen. Die genannten Materialien lassen sich im Kontakt mit nanoskaligen Siliziumpartikeln bei ausreichend hohen Temperaturen zersetzen, ohne dass es zu einer übermäßigen Oxidation des eingesetzten Siliziums kommt.

Besonders bevorzugt wird als Komponente 3 ein Epoxidharz verwendet, insbesondere ein Epoxidharz auf Basis von Bisphenol A und Epichlorhydrin. Beide Stoffe sind dem Fachmann als Ausgangsmaterialien von Epoxidharzen hinlänglich bekannt und müssen im Rahmen der vorliegenden Erfindung nicht näher erläutert werden.

In besonders bevorzugten Ausführungsformen des erfindungsgemäßen Verfahrens weist die Mischung, zusätzlich zu den Komponenten 1 bis 3, als Komponente 4 amorphen Leitruß auf. Überraschenderweise wurde gefunden, dass dieser Zusatz sehr positive Auswirkungen auf die innere Leitfähigkeit des aus dem erfindungsgemäßen Verfahren resultierenden Aktivmaterials hat sowie weiterhin strukturstabilisierende Eigenschaften. A priori war dies nicht zu erwarten, wird doch schließlich das Polymer ohnehin in amorphen Kohlenstoff umgewandelt, so dass die zusätzliche Zugabe von Leitruß überflüssig erscheint. Tatsächlich zeichnen sich Aktivmaterialien, die aus den genannten vier Komponenten hergestellt werden, aber in der Regel durch eine vergleichsweise höhere Zyklenstabilität aus als dies bei Aktivmaterialien, die nur unter Einsatz der Komponenten 1 bis 3 hergestellt wurden, der Fall ist.

Auswirkungen auf das Ergebnis des erfindungsgemäßen Verfahrens können auch die folgenden Parameter haben:
- Der Anteil an Siliziumpartikeln in der Mischung: Dieser wird bevorzugt auf einen Wert zwischen 10 Gew.-% und 50 Gew.-% eingestellt.
- Der Anteil an Lithium interkalierenden Kohlenstoffpartikeln in der Mischung: Dieser wird bevorzugt auf einen Wert zwischen 20 Gew.-% und 80 Gew.-% eingestellt.
- Der Anteil an dem amorphen Leitruß in der Mischung: Dieser wird bevorzugt auf einen Wert zwischen 1 Gew.-% und 20 Gew.-% eingestellt.
- Der Anteil an dem pyrolisierbaren Polymer oder Polymervorläufer in der Mischung: Dieser wird bevorzugt auf einen Wert zwischen 20 Gew.-% und 80 Gew.-% eingestellt.

Die Gewichtsangaben beziehen sich dabei bevorzugt jeweils auf das Gesamtgewicht der Mischung, also auf die Summe aus den Massen der Komponenten 1 bis 3, gegebenenfalls auch 4.

Es hat sich gezeigt, dass es von besonderem Vorteil ist, zur Herstellung der Mischung die Komponente 3 in einem Lösungsmittel gelöst vorzulegen und in dieser Lösung die Komponenten 1, 2 und gegebenenfalls 4 zu dispergieren. Dabei kann es sinnvoll sein, die Komponenten 1, 2 und gegebenenfalls 4 ihrerseits bereits einer Vordispergierung in dem Lösungsmittel zu unterwerfen, also diese Komponenten in dispergierter Form der Lösung aus Komponente 3 und dem Lösungsmittel zuzusetzen. Als Lösungsmittel sind beispielsweise Alkohole wie 1-Methoxy-2-propanol geeignet, insbesondere im Fall von Epoxidharzen als Komponente 3.

Bevorzugt wird der Mischung ein Härter für das Polymer oder den Polymervorläufer zugesetzt, bevorzugt nachdem die Komponenten 1, 2 und gegebenenfalls 4 gemäß obigen Ausführungen in der Lösung dispergiert wurden. Bei dem Härter handelt es sich im Fall der Verwendung von Epoxidharzen als Komponente 3 bevorzugt um einen Aminhärter. Auch derartige Härter für Epoxidharze sind dem Fachmann bekannt und bedürfen im Rahmen der vorliegenden Anmeldung keiner weiteren Erläuterung. Besonders bevorzugt wird als Aminhärter 3-(Dimethylamino)-1-Propylamin verwendet.

In bevorzugten Ausführungsformen wird das erwähnte Lösungsmittel vor der Wärmebehandlung der Mischung entfernt. Spätestens dabei vernetzt auch das Polymer oder der polymerisierbare Polymervorläufer unter dem Einfluss des gegebenenfalls zugegebenen Härters.

Bei der Wärmebehandlung wird die Mischung einer Temperatur zwischen 500 °C und 1200 °C ausgesetzt. Die exakte Temperatur ist primär abhängig von der stofflichen Beschaffenheit der Komponente 3. Bei Verwendung eines Epoxidharzes als Komponente 3 liegt die Temperatur bevorzugt im Bereich zwischen 600 °C und 1100 °C.

Gegebenenfalls kann es bevorzugt sein, die Wärmebehandlung in einer reduzierenden Atmosphäre oder unter Schutzgas vorzunehmen. Als vorteilhaft hat sich erwiesen, Luftsauerstoff bei der Reaktion so weit wie möglich auszuschließen.

Insbesondere bei Zusatz eines Härters liegt die Mischung, spätestens nach Entfernung des erwähnten Lösungsmittels, in der Regel als einstückiger Block vor. In diesen Fällen kann es zweckmäßig sein, die Mischung vor der Wärmebehandlung zu zerkleinern, bevorzugt zu pulverisieren.

Auch das nach dem erfindungsgemäßen Verfahren herstellbare Aktivmaterial ist Gegenstand der vorliegenden Erfindung. Entsprechend den obigen Ausführungen umfasst es Lithium interkalierende Kohlenstoffpartikel, deren Oberfläche mindestens teilweise mit einer Schicht aus amorphem Kohlenstoff bedeckt ist, in welche nanoskalige Siliziumpartikel eingebettet sind. Besonders bevorzugt besteht das erfindungsgemäße Aktivmaterial aus solchen Partikeln.

Das erfindungsgemäße Aktivmaterial kann mit einem Elektrodenbinder wie z.B. mit Natriumcarboxymethylzellulose und gegebenenfalls einem leitfähigkeitsverbesserndem Additiv zu einer Elektrode für Lithium-Ionen-Zellen, insbesondere eine negative Elektrode, weiterverarbeitet werden. Auch solche Elektroden sowie elektrochemische Zellen mit solchen Elektroden sind Gegenstand der vorliegenden Erfindung.

Das erfindungsgemäß Aktivmaterial stellt eine Alternative zum herkömmlichen Anodenmaterial Graphit für Lithium-Ionen-Batterien dar. Durch die Kombination der strukturstabilen, vergleichsweise niederkapazitiven Lithium interkalierenden Kohlenstoffpartikeln mit dem hochkapazitiven nano-Silizium konnte ein außerordentlich strukturstabiles Anodenmaterial für Lithium-Ionen Batterien entwickelt werden. Durch den Kern/Hüllen Aufbau und die Anwendung von nano-Silizium bei dem vorliegendem Anodenmaterial konnte die Strukturlabilität während dem Laden/Entladen des Siliziums umgangen werden und somit konnte trotz der starken Volumen- und Strukturänderung während des Laden/Entladen bei Verwendung von Silizium ein strukturstabiles Anodenmaterial hergestelllt werden.

Weitere Merkmale der Erfindung ergeben sich auch aus der nun folgenden Beschreibung der Figuren sowie bevorzugter Ausführungsformen in Verbindung mit den abhängigen Ansprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keinster Weise einschränkend zu verstehen.

### Ausführungs- und Vergleichsbeispiel

Zur Herstellung eines erfindungsgemäßen Aktivmaterals wurde das Epoxidharz Araldit®506 in dem Lösungsmittel 1-Methoxy-2-propanol vorgelegt und durch Rührung vollständig in Lösung gebracht. Anschließend wurden nanoskaliges Silizium, Ruß und Graphit dem im Lösungsmittel gelösten Epoxidharz im folgenden Verhältnis unter Rührung beigemengt:

| Zusammensetzung | |
|---|---|
| nano-Silizium | >10% |
| Ruß | >3% |
| Graphit | <80% |

Erst nach vollständiger Dispergierung dieser Komponenten wurde der Epoxidhärter (3-Dimethylamino-propylamin) der Lösung zugegeben. Nach dem Aushärten der Mischung im Trockenofen bei 60 °C wurde mittels eines Mörsers das Aktivmaterial zerkleinert. Anschließend wurde das hergestellte Produkt bei einer Temperatur von 900 °C für mehrere Stunden unter Schutzgas im Ofen kalziniert.

Um den Vorteil der Verwendung eines Epoxidharzes aufzuzeigen, wurde ein ansonsten vergleichbares Aktivmaterial ohne Epoxidharz hergestellt.

Aus dem erfindungsgemäßen Material und dem Vergleichsmaterial wurden jeweils Elektroden gefertigt und gegen Referenzelektroden geschaltet. Die Elektroden wurden elektrochemisch mittels Zyklovoltammetrie und Konstantstromzyklisierung charakterisiert. Es stellte sich heraus, dass die Verwendung des Epoxidharzes als Beschichtungsmaterial die Elektrodenperformance des Aktivmaterials positiv beeinflusst.

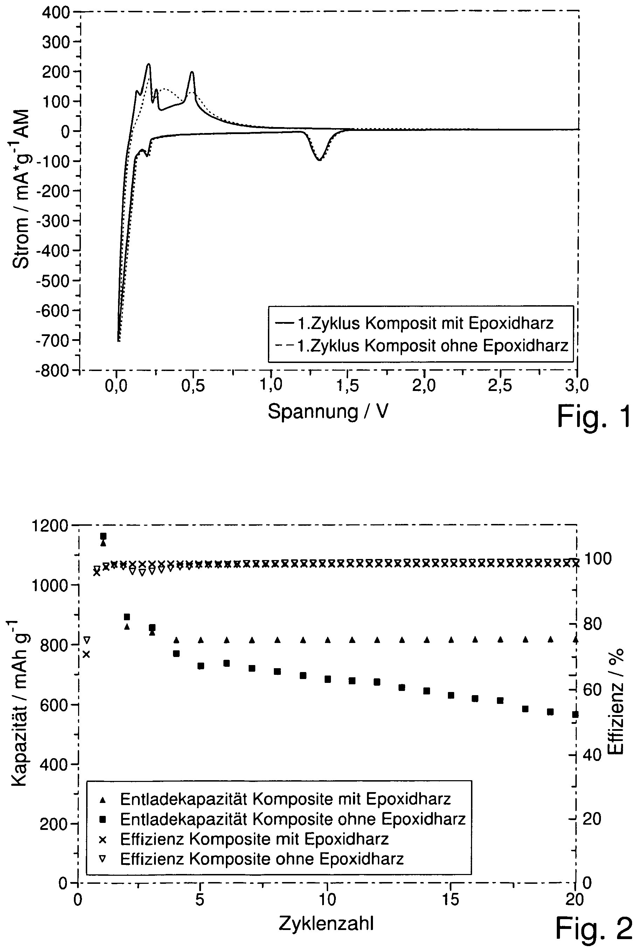

Fig. 1 zeigt den ersten Zyklus eines Zyklovoltammogrammes der beiden Elektroden. Im Gegensatz zu den scharfen schmalen Peaks des Voltammogrammes der Elektrode mit dem Epoxidharz zeigt dass Voltammogramm der Elektrode ohne Epoxidharz deutlich breitere Peaks was auf eine schlechtere Elektrodenkinetik hinweist.
Fig. 2 zeigt die Konstantstromzyklisierung der Vergleichselektroden. Diese zeigen, dass es bei dem Aktivmaterial ohne Epoxidharz zu einem viel stärkeren Kapazitätsabfall kommt als bei dem Aktivmaterial mit Epoxidharz, was wiederum auf eine schlechtere Partikelkontaktierung aufgrund des Fehlens des Epoxidharzes und somit der amorphen Kohlenstoffmatrix rückzuführen ist.

Sowohl die Zyklovoltammogramme als auch die Konstantstromzyklisierungen zeigen, dass der Zusatz eines Epoxidharzes bei dem nano-Silizium/Ruß-Graphit Kern-Hülle Komposit eine positive Wirkung auf das elektrochemische Verhalten des Aktivmaterials hat. Es wird angenommen, dass dies primär auf die bessere Kontaktierung der Partikel untereinander und die damit verbundene höhere Kompaktheit des gesamten Partikels zurückzuführen ist.

## Patentansprüche

1. Verfahren zur Herstellung von Aktivmaterial für die Elektrode einer elektrochemischen Zelle, umfassend die Schritte
• Bereitstellen von Lithium interkalierenden Kohlenstoffpartikeln mit einer mittleren Partikelgröße zwischen 1 µm und 100 µm als Komponente 1,
• Bereitstellen von Siliziumpartikeln mit einer mittleren Partikelgröße zwischen 5 nm und 500 nm als Komponente 2,
• Bereitstellen eines zu amorphem Kohlenstoff pyrolisierbaren Polymers oder Polymervorläufers, ausgewählt aus der Gruppe mit Epoxidharz, Polyurethanharz und Polyesterharz, als Komponente 3,
• Mischen der Komponenten 1 bis 3 und
• Wärmebehandlung der Mischung unter Ausschluß von Luftsauerstoff bei einer Temperatur zwischen 500 °C und 1200 °C, bei der sich das pyrolisierbare Polymer oder der pyrolisierbare Polymervorläufer unter Bildung von amorphem Kohlenstoff zersetzt.

2. Verfahren nach Anspruch 1, **dadurch gekennzeichnet, dass** als Komponente 3 ein Epoxidharz, insbesondere auf Basis von Bisphenol A und Epichlorhydrin, verwendet wird.

3. Verfahren nach einem der vorhergehenden Ansprüche, **dadurch gekennzeichnet, dass** die Mischung als Komponente 4 amorphen Leitruß aufweist.

4. Verfahren nach einem der vorhergehenden Ansprüche, **dadurch gekennzeichnet, dass**
• der Anteil an Siliziumpartikeln in der Mischung zwischen 10 Gew.-% und 50 Gew.-% liegt und/oder
• der Anteil an Lithium interkalierenden Kohlenstoffpartikeln in der Mischung zwischen 20 Gew.-% und 80 Gew.-% liegt und/oder
• der Anteil an dem amorphen Leitruß in der Mischung zwischen 1 Gew.-% und 20 Gew.-% liegt und/oder
• der Anteil an dem pyrolisierbaren Polymer oder Polymervorläufer in der Mischung zwischen 20 Gew.-% und 80 Gew.-% liegt.

5. Verfahren nach einem der vorhergehenden Ansprüche, **dadurch gekennzeichnet, dass** die Komponente 3 in einem Lösungsmittel gelöst vorgelegt wird und die Komponenten 1, 2 und gegebenenfalls 4 in der Lösung dispergiert werden.

6. Verfahren nach einem der vorhergehenden Ansprüche, **dadurch gekennzeichnet, dass** der Mischung ein Härter für das Polymer oder den Polymervorläufer, insbesondere ein Aminhärter für das Epoxidharz, zugesetzt wird, bevorzugt nachdem die Komponenten 1, 2 und gegebenenfalls 4 gemäß Anspruch 5 in der Lösung dispergiert wurden.

7. Verfahren nach Anspruch 6, **dadurch gekennzeichnet, dass** das Lösungsmittel vor der Wärmebehandlung entfernt wird.

8. Verfahren nach einem der vorhergehenden Ansprüche, **dadurch gekennzeichnet, dass** die Mischung bei einer Temperatur zwischen 600 °C und 1100 °C wärmebehandelt wird.

9. Verfahren nach einem der vorhergehenden Ansprüche, **dadurch gekennzeichnet, dass** die Wärmbehandlung in einer reduzierenden Atmosphäre vorgenommen wird.

10. Verfahren nach einem der Ansprüche 5 bis 9, **dadurch gekennzeichnet, dass** die ausgehärtete Mischung vor der Wärmebehandlung zerkleinert, bevorzugt pulverisiert, wird.

11. Elektrochemisches Aktivmaterial umfassend Lithium interkalierende Kohlenstoffpartikel, deren Oberfläche mindestens teilweise mit einer Schicht aus amorphem Kohlenstoff bedeckt ist, wobei in die Schicht Siliziumpartikel mit einer mittleren Partikelgröße zwischen 5 nm und 500 nm eingelagert sind und wobei zur Herstellung des Aktivmaterial die folgenden Schritte durchgeführt wurden:
• Bereitstellen von Lithium interkalierenden Kohlenstoffpartikeln mit einer mittleren Partikelgröße zwischen 1 µm und 100 µm als Komponente 1,
• Bereitstellen von Siliziumpartikeln mit einer mittleren Partikelgröße zwischen 5 nm und 500 nm als Komponente 2,
• Bereitstellen eines zu amorphem Kohlenstoff pyrolisierbaren Polymers oder Polymervorläufers, ausgewählt aus der Gruppe mit Epoxidharz, Polyurethanharz und Polyesterharz, als Komponente 3,
• Mischen der Komponenten 1 bis 3 und
• Wärmebehandlung der Mischung unter Ausschluß von Luftsauerstoff bei einer Temperatur zwischen 500 °C und 1200 °C, bei der sich das pyrolisierbare Polymer oder der pyrolisierbare Polymervorläufer unter Bildung von amorphem Kohlenstoff zersetzt..

12. Elektrode, umfassend ein elektrochemisches Aktivmaterial nach Anspruch 11, vorzugsweise in Kombination mit einem Binder und einem Leitfähigkeitsverbesserer.

13. Elektrochemische Zelle, umfassend eine Elektrode nach Anspruch 12.

## Claims

1. Process for producing active material for the electrode of an electrochemical cell, which comprises the steps
- provision of lithium-intercalating carbon particles having an average particle size in the range from 1 µm to 100 µm as component 1,
- provision of silicon particles having an average particle size in the range from 5 nm to 500 nm as component 2,
- provision of a polymer or polymer precursor which can be pyrolyzed to form amorphous carbon and is selected from the group consisting of epoxy resin, polyurethane resin and polyester resin, as component 3,
- mixing of the components 1 to 3 and
- heat treatment of the mixture with exclusion of atmospheric oxygen at a temperature between 500°C and 1200°C at which the pyrolyzable polymer or the pyrolyzable polymer precursor decomposes to form amorphous carbon.

2. Process according to Claim 1, **characterized in that** an epoxy resin, in particular an epoxy resin based on bisphenol A and epichlorohydrin, is used as component 3.

3. Process according to either of the preceding claims, **characterized in that** the mixture comprises amorphous conductive carbon black as component 4.

4. Process according to any of the preceding claims, **characterized in that**
- the proportion of silicon particles in the mixture is in the range from 10% by weight to 50% by weight and/or
- the proportion of lithium-intercalating carbon particles in the mixture is in the range from 20% by weight to 80% by weight and/or
- the proportion of the amorphous conductive carbon black in the mixture is in the range from 1% by weight to 20% by weight and/or
- the proportion of the pyrolyzable polymer or polymer precursor in the mixture is in the range from 20% by weight to 80% by weight.

5. Process according to any of the preceding claims, **characterized in that** the component 3 is initially charged as a solution in a solvent and the components 1, 2 and optionally 4 are dispersed in the solution.

6. Process according to any of the preceding claims, **characterized in that** a hardener for the polymer or the polymer precursor, in particular an amine hardener for the epoxy resin, is added to the mixture, preferably after the components 1, 2 and optionally 4 have been dispersed in the solution according to Claim 5.

7. Process according to Claim 6, **characterized in that** the solvent is removed before the heat treatment.

8. Process according to any of the preceding claims, **characterized in that** the mixture is heat treated at a temperature in the range from 600°C to 1100°C.

9. Process according to any of the preceding claims, **characterized in that** the heat treatment is carried out in a reducing atmosphere.

10. Process according to any of Claims 5 to 9, **characterized in that** the cured mixture is comminuted, preferably pulverized, before the heat treatment.

11. Electrochemical active material, comprising lithium-intercalating carbon particles whose surface is at least partly covered with a layer of amorphous carbon, wherein silicon particles having an average particle size in the range from 5 nm to 500 nm are embedded in the layer, and wherein, in order to produce the active material, the following steps are carried out:
- provision of lithium-intercalating carbon particles having an average particle size in the range from 1 µm to 100 µm as component 1,
- provision of silicon particles having an average particle size in the range from 5 nm to 500 nm as component 2,
- provision of a polymer or polymer precursor which can be pyrolyzed to form amorphous carbon and is selected from the group consisting of epoxy resin, polyurethane resin and polyester resin, as component 3,
- mixing of the components 1 to 3 and
- heat treatment of the mixture with exclusion of atmospheric oxygen at a temperature between 500°C and 1200°C at which the pyrolyzable polymer or the pyrolyzable polymer precursor decomposes to form amorphous carbon.

12. Electrode comprising an electrochemical active material according to Claim 11, preferably in combination with a binder and a conductivity improver.

13. Electrochemical cell comprising an electrode according to Claim 12.

## Revendications

1. Procédé de fabrication d'un matériau actif pour l'électrode d'une cellule électrochimique, comprenant les étapes suivantes :
- la préparation de particules de carbone intercalées avec du lithium ayant une taille de particule moyenne comprise entre 1 µm et 100 µm en tant que composant 1,
- la préparation de particules de silicium ayant une taille de particule moyenne comprise entre 5 nm et 500 nm en tant que composant 2,
- la préparation d'un polymère ou précurseur de polymère pyrolysable en carbone amorphe, choisi dans le groupe comprenant une résine d'époxyde, une résine de polyuréthane et une résine de polyester, en tant que composant 3,
- le mélange des composants 1 à 3, et
- le traitement thermique du mélange avec exclusion de l'oxygène de l'air à une température comprise entre 500 °C et 1 200 °C, lors duquel le polymère pyrolysable ou le précurseur de polymère pyrolysable se décompose en formant du carbone amorphe.

2. Procédé selon la revendication 1, **caractérisé en ce qu'**une résine d'époxyde, notamment à base de bisphénol A et d'épichlorhydrine, est utilisée en tant que composant 3.

3. Procédé selon l'une quelconque des revendications précédentes, **caractérisé en ce que** le mélange comprend en tant que composant 4 du noir de carbone conducteur amorphe.

4. Procédé selon l'une quelconque des revendications précédentes, **caractérisé en ce que**
- la proportion de particules de silicium dans le mélange est comprise entre 10 % en poids et 50 % en poids, et/ou
- la proportion de particules de carbone intercalées avec du lithium dans le mélange est comprise entre 20 % en poids et 80 % en poids, et/ou
- la proportion de noir de carbone conducteur amorphe dans le mélange est comprise entre 1 % en poids et 20 % en poids, et/ou
- la proportion de polymère ou de précurseur de polymère pyrolysable dans le mélange est comprise entre 20 % en poids et 80 % en poids.

5. Procédé selon l'une quelconque des revendications précédentes, **caractérisé en ce que** le composant 3 est chargé initialement dissous dans un solvant, et les composants 1, 2 et éventuellement 4 sont dispersés dans la solution.

6. Procédé selon l'une quelconque des revendications précédentes, **caractérisé en ce qu'**un durcisseur pour le polymère ou le précurseur de polymère est ajouté au mélange, notamment un durcisseur aminé pour la résine d'époxyde, de préférence après que les composants 1, 2 et éventuellement 4 aient été dispersés dans la solution selon la revendication 5.

7. Procédé selon la revendication 6, **caractérisé en ce que** le solvant est éliminé avant le traitement thermique.

8. Procédé selon l'une quelconque des revendications précédentes, **caractérisé en ce que** le mélange est traité thermiquement à une température comprise entre 600 °C et 1 100 °C.

9. Procédé selon l'une quelconque des revendications précédentes, **caractérisé en ce que** le traitement thermique est réalisé dans une atmosphère réductrice.

10. Procédé selon l'une quelconque des revendications 5 à 9, **caractérisé en ce que** le mélange durci est broyé, de préférence pulvérisé, avant le traitement thermique.

11. Matériau actif électrochimique comprenant des particules de carbone intercalées avec du lithium, dont la surface est au moins partiellement recouverte avec une couche de carbone amorphe, des particules de silicium ayant une taille de particule moyenne comprise entre 5 nm et 500 nm étant incorporées dans la couche et les étapes suivantes ayant été réalisées pour la fabrication du matériau actif :
- la préparation de particules de carbone intercalées avec du lithium ayant une taille de particule moyenne comprise entre 1 µm et 100 µm en tant que composant 1,
- la préparation de particules de silicium ayant une taille de particule moyenne comprise entre 5 nm et 500 nm en tant que composant 2,
- la préparation d'un polymère ou précurseur de polymère pyrolysable en carbone amorphe, choisi dans le groupe comprenant une résine d'époxyde, une résine de polyuréthane et une résine de polyester, en tant que composant 3,
- le mélange des composants 1 à 3, et
- le traitement thermique du mélange avec exclusion de l'oxygène de l'air à une température comprise entre 500 °C et 1 200 °C, lors duquel le polymère pyrolysable ou le précurseur de polymère pyrolysable se décompose en formant du carbone amorphe.

12. Électrode, comprenant un matériau actif électrochimique selon la revendication 11, de préférence en combinaison avec un liant et un agent d'amélioration de la conductivité.

13. Cellule électrochimique, comprenant une électrode selon la revendication 12.
